# EUROPEAN PATENT SPECIFICATION

(11) **EP 1 216 612 B1**
(45) Date of publication and mention of the grant of the patent: **05.11.2008**
(21) Application number: 01310479.9
(22) Date of filing: 14.12.2001
(51) Int. Cl.: A01G 13/02

(54) **Protective sheeting**
Schutzfolie
Film protecteur

(30) Priority: 16.12.2000 GB 0030733
(43) Date of publication of application: 26.06.2002
(73) Proprietor: DON & LOW LIMITED, Angus DD1 1EY (GB)
(72) Inventor: Avril, David, Dundee DD2 1LR (GB); Reid, Martin, Forfar DD8 3JT (GB); Baxter, George, Montrose DD10 9DE (GB)
(74) Representative: Moreland, David

(56) References cited:
- WO-A-99/38667
- GB-A- 1 322 849
- US-A- 5 919 539
- PATENT ABSTRACTS OF JAPAN vol. 1995, no. 01, 28 February 1995 (1995-02-28) & JP 06 296441 A (KURARAY CO LTD), 25 October 1994 (1994-10-25)

## Description

### TECHNICAL FIELD OF INVENTION

The present invention relates to sheeting, comprising an agricultural crop protection cover, ground cover, geotextile or construction fabric.

### BACKGROUND TO INVENTION

Ground covers, such as agricultural crop protection covers are placed over plants and/or seedlings to provide a barrier to help prevent damage from insects, birds, wind or the like. It is desirable for such a cover to have good light and water transmission properties to prevent plant growth from being inhibited through lack of light or water. Polyethylene plastic sheets can be used as crop covers; however, these can cause the plants underneath to become scorched in sunny conditions and can prevent rain passing through to the plants underneath.

Crop covers made from nonwoven spunbonded fabrics have an advantage that the porosity thereof allows rain and water vapour to pass through relatively easily, and the plants underneath tend not to become scorched because they are somewhat shaded. Such covers also act as an effective fleece to form an insulating layer over the plants which helps protect them from frost damage. The cover can also help prevent heat loss from the ground underneath. In short, such covers effectively form a micro-climate environment beneath the cover.

However, spunbonded crop covers can suffer damage such as tearing from abrasion on stones or the like, and from damage caused by birds landing on the cover, attempting to access the plants underneath or pecking off insects. Damage can also occur when the cover is stretched too tightly. It is therefore important to seek to limit damage of a cover to a minimum.

Beneficially such a cover may withstand more than one standard crop growing season. This means that after one season on a field protecting a crop, it may be rolled up and stored away to be used in a further growing season, e.g. the following year. This can be an advantage over standard covers, which typically have a lifespan of one season.

Agricultural fields are often 15 metres or greater in width. Typical spunbonded fabrics are produced in widths of between 2.4 metres to 5 metres, and hence several pieces are usually joined together along the long edges thereof to form a typical crop cover. Conventionally, the joins are made by bonding the fabric pieces with a continuous line or lines of glue applied to the long edges of the fabric. It is presently difficult to monitor the glue line to ensure it remains continuous which sometimes results in unglued portions of fabric. Also, it has been observed that when damage occurs, for example, tearing, this happens to a larger extent at the seams than elsewhere on the cover even when a good glue line has been applied. Even though it is believed that the bond strength at the bond seam is relatively high, the seam tear strength of the fabric adjacent to the seam is often lower than that of the fabric itself. This is rationalised in that fabrics having a high tear strength tend to have loosely adhered fibres of fabric, that is, the fabric does not tear easily, compared with a fabric in which the fibres are more fixedly bonded together, such as at the bond points of two pieces of fabric, allowing easier tearing of fabric at or adjacent those points because the fibres do not move or "give" as freely as weakly bonded or loosely adhered fibres.

It is therefore desirable to provide a strong durable bond between adjacent pieces of fabric which make up a crop cover.

It is an object of the present invention to obviate or mitigate the abovementioned disadvantages in the prior art.

It is a further object of at least one embodiment of the present invention to seek to provide a crop cover addressing the aforementioned desire.

### SUMMARY OF INVENTION

According to a first aspect of the present invention there is provided a sheeting according to claim 1 appended hereto.

Preferably, the at least two sheet form members comprise at least two sheet form members joined at or near respective long edges of each other.

Desirably the joined portion or seam incorporates a folded portion of said sheet form members to provide a seam comprising at least two layers, e.g. three or four layers.

The cover may comprise a ground cover typically, but not exclusively, an agricultural crop protection cover. Uses include protection of lettuce crops. Other uses of the cover may be envisaged such as protection of bedding, or other plants, e.g. for domestic sale or otherwise, or protection of seed rows. Further, such a cover may be generally provided to cover an area of land for any other desirable purpose, for example, use of an opaque cover to substantially block out sunlight.

The cover may be made from any suitable material, preferably a plastic polymeric material such as a polyolefin, for example, polypropylene, polyethylene or the like, and mixtures and copolymers thereof.

The cover may further include additives such as ultraviolet light stabilising additive(s), polymer processing aids, fillers, colourants, plasticisers and/or the like.

Each sheet form member of the cover may take any convenient form and may include a membranous sheet of material for example a film, a net and/or a nonwoven fabric such as a spunbonded fabric, including any combination of these. The cover may be comprised of two or more layers to give a laminated cover, for example, a two-layer, three-layer or a four-layer laminate.

A cover with a net and/or a film may reinforce the cover and therefore increase the ease of use. Such a cover may have increased tensile strength and increased rigidity. The netting or film may help to reinforce an edge of the cover providing additional strength, and acting to hinder the crop cover creasing thereby making the cover easier to roll out and then roll up for storage. A net may also help to increase the lifespan of the cover.

It is beneficial for the netting to have good light transmission and stabilisation from sunlight degradation.

Preferably, each sheet form member of the cover comprises or includes a polypropylene non-woven spunbonded fabric.

Each sheet form member of the cover will typically be substantially rectangular in shape. A long edge of a rectangular sheet form member may be of any suitable length for use in a typical agricultural field. Typically the cover, which may be rolled, may be of a length between 10 - 500 metres, preferably 10-250 metres but may be less than 10metres or greater than 500 metres.

The width of each spunbonded fabric sheet form member will usually be determined by the size of a die block used to extrude the molten polymer (eg. polypropylene) through a multitude of small die holes within the die block on making the spun bonded fabric. Typical sizes of die block are 2.4 metres to 3.2 metres, and hence typical widths of spunbonded fabrics will be within this range, although some fabric widths may be smaller or greater than the die block size due to post extruded shrinkage or stretching. However, it will be appreciated that the width may be any width available.

The bonded seam may be produced by any suitable ultrasonic bonding method such as solid bar bonding. The applicant has found that particular patterns of bonding such as intermittent bonding, or a mixture of solid line and intermittent bonding have particular utility in giving a bonded seam having high tear strength.

In an alternative, the bonding may be in the form of a solid line, although to-date intermittent bonding has been found to be beneficial in providing high tear strength.

Such intermittent bond patterns are typically comprised of a series of embossed bond areas.

In some embodiments the bond areas may be of a shape selected from: rectangles, squares, solid lines or elongate or "bar-like" shapes or combinations thereof.

In other embodiments the bond areas may not have an angular geometry and/or contain sharp edges, vertices or points, for example, as found in a rectangular bond area. Preferably such bond areas have a substantially curved outer boundary or perimeter.

Preferred such bond area shapes include: elongate or "bar-like", circular, oval, elliptical and/or the like.

Particularly preferred is an oval, elliptical or "bar-like" shape.

Desirably a plurality of bond areas are arranged as at least one substantially straight line.

Preferably there are provided a number of substantially parallel spaced lines of bond areas.

Preferably, the line/lines of bond areas are formed substantially parallel to adjacent edges of the at least two sheet form members.

Preferably the bond areas of any given line are spaced substantially equally one from the other.

Desirably the bond areas in any one line are all of substantially the same shape.

With respect to an edge of at least one of the at least two sheet form member, each bond area may have the same or different orientation with respect to an adjacent bond area within any one particular line of bond areas.

The bond areas in any one particular line may be rotated with respect to adjacent bond areas with reference to an edge of at least one of the at least two sheet form member around 45°.

If the bond areas are rotated with respect to adjacent bond areas, preferably every fourth bond area in any given line has substantially the same orientation with respect to a particularly defined axis giving a regular repeat pattern along the line of bond areas.

Preferably the plurality of bond areas comprises several substantially parallel adjacent lines of regularly spaced bond areas.

The bond areas in a particular line of bond areas may be aligned or off-set, e.g. transversely off-set with respect to bond areas in an adjacent line of bond areas.

At least one line of bond areas may have a different spacing of adjacent bond areas than a spacing of bond areas in another line(s).

Adjacent bond areas of the at least one line may be spaced at a lower frequency or density than the spacing of the bond areas of the another line(s), that is to say, a distance between adjacent bond areas of the at least one line is greater than that of adjacent bond areas of the another line(s). This may be beneficial in enhancing a tear strength of the cover.

Preferably such further spaced apart bond areas are spaced at around twice the distance of the another bond areas.

Preferably the at least one line of further spaced apart bond areas is an outer or inner line of the plurality of lines.

Desirably an outer or inner line comprises bond areas which are embossed less deeply than other bond areas in a series of lines.

Desirably, a line of bond areas adjacent to the at least one line of further spaced apart bond areas is embossed more deeply than the at least one line of further spaced apart bond areas, and the next adjacent line of bond areas is bonded more deeply than the line of bond areas adjacent to the at least one line of further spaced apart bond areas, and so on, giving a progression of more deeply bonded areas across the bonded seam.

A line of bond areas may be interrupted by at least one unbonded region or portion providing a gap in the line.

Preferably, more than one gap is provided and the gaps are spaced substantially equally one from the other.

Desirably a bond area adjacent a gap in a line of bond areas is curved.

Preferably such a curved bond area extends longitudinally and transversely into the gap in a direction not parallel to the line of bond areas from which it extends.

Conveniently, the series of bond areas may further comprise a bonded region or regions which provide display means for example, a name, logo or the like.

Such bonded regions may be provided by any bonding technique, such as ultrasonic bonding, calendering or gluing or combinations thereof.

Desirably such bonded regions are provided adjacent to a series of bonded areas.

According to a second aspect of the present invention there is provided a method according to claim 58 appended hereto.

Preferably said seam is formed at or adjacent long edges of the at least two sheet form members.

The parts of fabric to be bonded may be typically placed in side by side relation to one another and then bonded together.

A seam so formed may comprise an upstanding seam or a downstanding seam.

Typically the seam consists of a region of around 15-20mm wide, but may typically be between 5mm and 100mm.

Two or more sheet form members may be joined to provide a crop cover, bonded portions forming a seam. Some seams may be ultrasonically bonded while other seams in the same cover may be formed by bonding methods such as calendering or gluing. Also, any one seam may be formed by use of a combination of any of the aforementioned bonding methods. Thus a seam may be formed, for example, by calendering and ultrasonic bonding. Further, a first part of one seam may be bonded using a first bonding method, and a second part of said seam may be bonded using a second bonding method where such bonding methods are chosen from the aforementioned methods.

A width of the cover will depend on the width and number of parts of fabric joined together but will typically be between 6 metres and 16 metres wide, and generally up to around 15.2 metres.

Typical ultrasonic bonding utilised in the present invention may use linear power at 50-60 cycles which may be converted to electronic ultrasonic frequencies of approximately 20,000 cycles which may then be converted into a boosted amplitude mechanical vibration. This vibration may be delivered by a horn to the fabric to be bonded. The particular bonding pattern may be determined by a raised pattern of emboss islands formed on an embossing wheel or anvil drum supported on an anvil. Optionally the anvil may also support a cutting wheel which enables the fabric to be sealed and cut simultaneously on application of ultrasonic energy. Either the anvil drum or horn or both together can be configured by any suitable method to rotate so that the fabric passing there through does not drag or crease thus giving a high throughput of fabric.

Conveniently if the cover comprises a nonwoven spunbonded fabric and a net, the fabric and net may be bonded together by means of the ultrasonic bonding technique.

### BRIEF DESCRIPTION OF DRAWINGS

Embodiments of the present invention will now be described with reference to the following non-limiting examples represented by the following drawings which are:
Figure 1 a flow diagram representing steps for producing a single layer of spunbonded fabric for use in embodiments of the present invention;
Figure 2 a flow diagram representing steps for formation of a sheeting according to an embodiment of the present invention by ultrasonically bonding together two parts of spunbonded fabric;
Figure 3a schematic illustration, in perspective, of a method of joining a number of pieces of spunbonded fabric according to Figure 1 with seams formed using ultrasonic bonding so as to provide a sheeting according to the present invention;
Figure 3b schematic illustration showing how the joined fabric pieces of Figure 3a are opened out to be placed on a field;
Figure 4 schematic illustration showing a sheeting according to an embodiment of the present invention including an upstanding seam formed by the process of Figure 3a;
Figure 5 a schematic view of a sheeting according to an embodiment of the present invention including two parts of nonwoven spunbonded fabric joined by an ultrasonically formed three stitch weld seam.
Figure 6 a representation of part of an engraved island pattern utilizing oval bond islands provided on an embossing wheel for use in formation of a sheeting according to an embodiment of the present invention;
Figure 7 a representation of an engraved island pattern utilizing oval bond islands incorporating islands shaped to form a logo to be applied to an embossing wheel;
Figures 8a and 8b schematic cross-sectional views of alternative emboss island profiles taken along line A-A of Figure 6;
Figure 8c a schematic view of a profile of emboss points across the bond pattern of Figure 6 along line B - B ;
Figure 9a a flow diagram representing steps for producing a woven net for use in sheeting according to an embodiment of the present invention;
Figure 9b a flow diagram representing steps for producing a nonwoven net for use in sheeting according to an embodiment of the present invention;
Figure 10 a flow diagram representing steps for laminating a spunbond sheet to a net using an adhesive technique so as to provide a sheet part for use in sheeting according to an embodiment of the present invention;
Figure 11 a flow diagram representing steps for laminating a spunbond sheet to a net using ultrasonic bonding so as to provide a sheet part for use in sheeting according to an embodiment of the present invention ;
Figure 12 a flow diagram representing steps for laminating a spunbond sheet to a net using a calender so as to provide a sheet part for use in sheeting according to an embodiment of the present invention;
Figure 13 a schematic perspective view of a portion of a sheet part comprising a one layer nonwoven spunbonded/one layer net laminate for use in an embodiment of the present invention;
Figure 14 a schematic perspective view of a portion of a sheet part comprising a one layer nonwoven spunbonded/one layer net/one layer nonwoven spunbonded laminate for use in an embodiment of the present invention;
Figure 15a a representation of part of an engraved elongate emboss island pattern provided on an embossing wheel for use in formation of a sheeting according to an embodiment of the present invention.
Figure 15b a cross-sectional view of an emboss island along line A-A of Figure 15a;
Figure 15c a schematic representation of an embossed pattern produced on a fabric after embossing of the fabric with the engraved emboss island pattern of Figure 15a, the fabric comprising a sheet part according to an embodiment of the present invention;
Figure 16a a representation of part of an engraved elongate emboss island pattern provided on an embossing wheel for use in formation of a sheeting according to an embodiment of the present invention;
Figure 16b a cross-sectional view of an emboss island along line A-A of Figure 16a;
Figure 16c a schematic representation of an embossed pattern produced on a fabric after embossing of the fabric with the engraved emboss island pattern of Figure 16a, the fabric comprising a sheet part according to an embodiment of the present invention ;
Figure 17a a representation of part of an engraved elongate emboss island pattern provided on an embossing wheel for use in formation of a sheeting according to an embodiment of the present invention;
Figure 17b a cross-sectional view of an emboss island along line A-A of Figure 17a;
Figure 17c a schematic representation of an embossed pattern produced on a fabric after embossing of the fabric with the engraved emboss island pattern of Figure 17a, the fabric comprising a sheet part according to an embodiment of the present invention;
Figure 18a a representation of part of an engraved elongate emboss island pattern provided on an embossing wheel for use in formation of a sheeting according to an embodiment of the present invention;
Figure 18b a cross-sectional view of an emboss island along line A-A of Figure 18a.
Figure 18c a schematic representation of an embossed pattern produced on a fabric after embossing of the fabric with the engraved emboss pattern of Figure 18a, the fabric comprising a sheet part according to an embodiment of the present invention;
Figure 19 a schematic representation of an ultrasonic bonding apparatus comprising a horn and anvil for bonding fabric to form seams according to the present invention;
Figures 20a, 20b and 20c differing constructions of seam which may be formed according to the present invention;
Figure 20d a seam construction which is not part of the present invention;
Figure 21a a representation of part of an engraved elongate emboss island pattern provided on an embossing wheel for use in formation of a sheeting according to an embodiment of the present invention; and
Figure 21b a cross-sectional view of the emboss island along line A-A of Figure 21a.

### DETAILED DESCRIPTION OF DRAWINGS

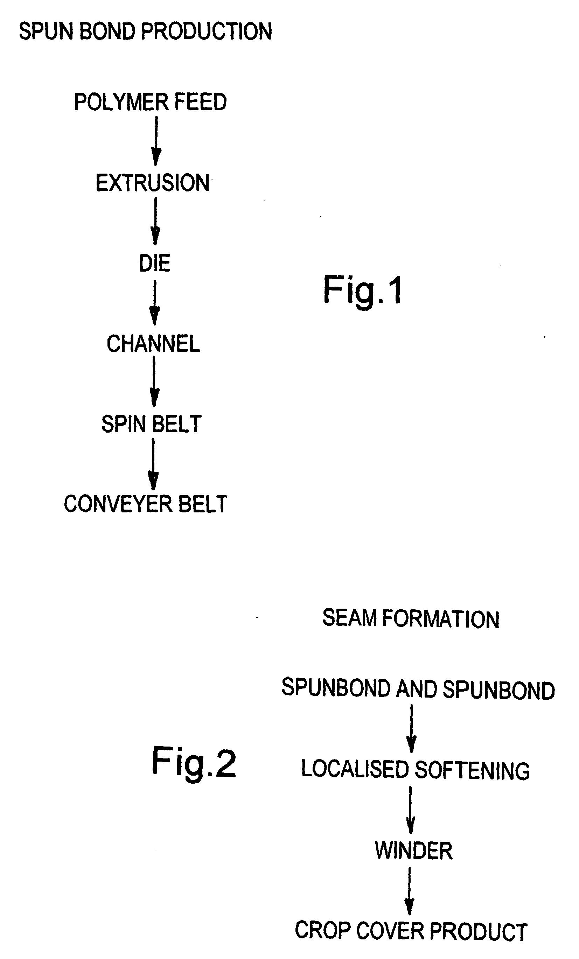

With reference initially to Figure 1, polymer feed, typically in the form of polymer granules or powder comprising, for example, polypropylene is blown from a storage silo into a holding hopper, from which it is fed by vacuum into a dosing unit and then by gravity into a mixing hopper from which it enters an extruder hopper and then an extruder. Other materials, such as UV stabilising masterbatch can be transferred by vacuum into a separate dosing unit and then fed gravimetrically into the mixing hopper, where it is mixed with the polypropylene before being fed into the extruder hopper. The polymer is transported by screw feed through a zone heated extruder. The thermal gradient is approximately 185-215°C. During this process the polymer is melted, and mixed by the screw to give a homogenous melt. On exit, the melt is filtered, then pumped by means of a spin pump to a die block. The die block is a highly engineered metal block which may be 3.2 metres wide with approximately 12,000 holes, or 2.4 metres wide with approximately 9000 holes. Each of these holes is 0.6mm in diameter.

The molten polypropylene blend is then pumped through the die to form a multiplicity of continuous filaments, which are extruded downwards through a controlled air flow. The air flow is controlled to serve three functions:-
1. To cool and solidify the filaments ;
2. To stretch the filaments, in order to make the fibres finer and to develop fibre tenacity;
3. To deposit filaments in a random fashion on to a moving spin belt, to form a loose unconsolidated web.

The web is transferred from the spin belt to a conveyor belt for emboss bonding in a hot thermal calendar to form a sheet form member comprising a single layer of spunbonded fabric for use in embodiments of the present invention.

With reference to Figure 2, two layers of such sheet form member are overlapped, and the overlapped portions then subjected to ultrasonic energy by feeding the overlapped portions into an ultrasonic apparatus where heat is delivered to the sheet form members by means of a horn. Local softening and/or melting of the sheet form members occurs where the ultrasonic energy is applied to the sheet form members, and the two layers are then able to bond together to form a seam at a joined portion. The joined sheet form members are then wound onto a winder for storage. The above process may be repeated to join as many pieces of fabric together as necessary to give the final sheeting products such as a crop cover product.

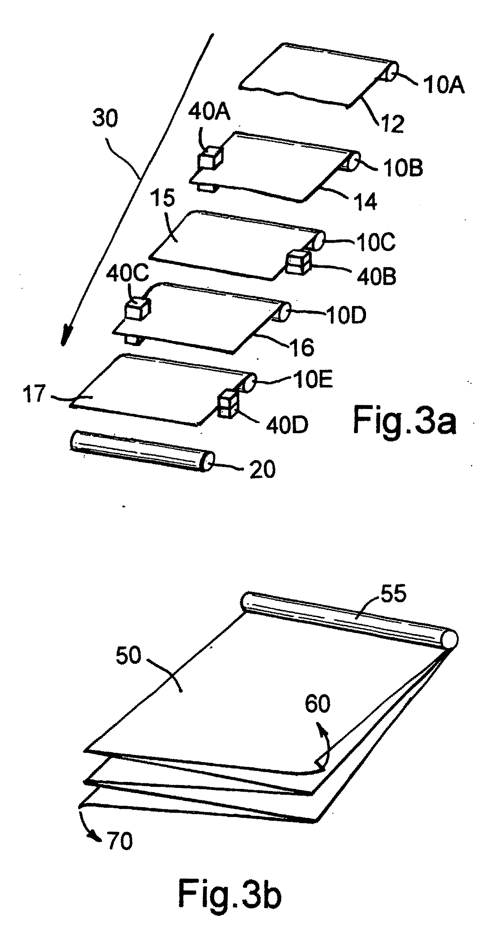

Referring to Figure 3a, as an example, five rolls 10A - 10E of sheet parts comprising spunbonded fabric are schematically shown in perspective from above. Fabric 12 from the top of roll 10A is unwound and passed over the top of roll 10B. Fabric 14 from the top of roll 10B is then also unwound so that the two layers of fabric are overlapping and extending in the direction of arrow 30. Ultrasound is applied to the overlapped edge of the two pieces of fabric 12 and 14 as the fabric 12 and 14 passes through an ultrasonic welding unit 40A.

This process is continued; thus the overlapped and joined fabrics 12 and 14 from rolls 10A and 10B respectively then passes over the top of roll 10C. Fabric 15 from the top of roll 10C is then unwound and joined to the fabric 14 from roll 10B by forming a seam using an ultrasonic welding unit 40B at an edge of the overlapped fabrics.

The process continues by joining fabric 16 from roll 10D to fabric 15 from roll 10C, using ultrasonic welding apparatus 40C, and joining fabric 17 from roll 10E to fabric 16 from roll 10D using ultrasonic welding apparatus 40D. The final layered fabric is thus formed as a concertinered sheet 50 and is wound onto a storage roll 20.

As indicated schematically in Figure 3b, in use, the concertinered sheet 50 is unwound from a roll 55 and opened out by unfolding it to its full width while being placed onto a crop field or the like as indicated by arrows 60 and 70.

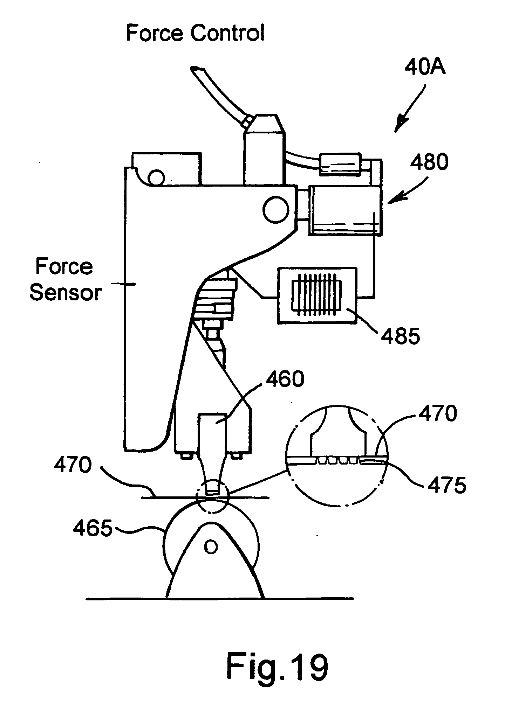

An example of an ultrasonic bonding apparatus, e.g. 40A is shown schematically in Figure 19. The apparatus 40A comprises a weld horn 460, and an anvil in the form of a rotatable drum or wheel 465. Fabric 470 to be bonded is passed between the weld horn 460 and anvil drum 465 where the weld horn 460 delivers ultrasound to the fabric 470. The anvil drum 465 has an engraving pattern comprising emboss islands 475 applied to its surface.

Apparatus 40A further comprises a computer controlled force control unit 480 having a force sensor chip 485 which enables the weld horn 460 to move in a vertical direction to ensure a more or less constant pressure is applied to the fabric 470 in response to thickness variations in fabric 470.

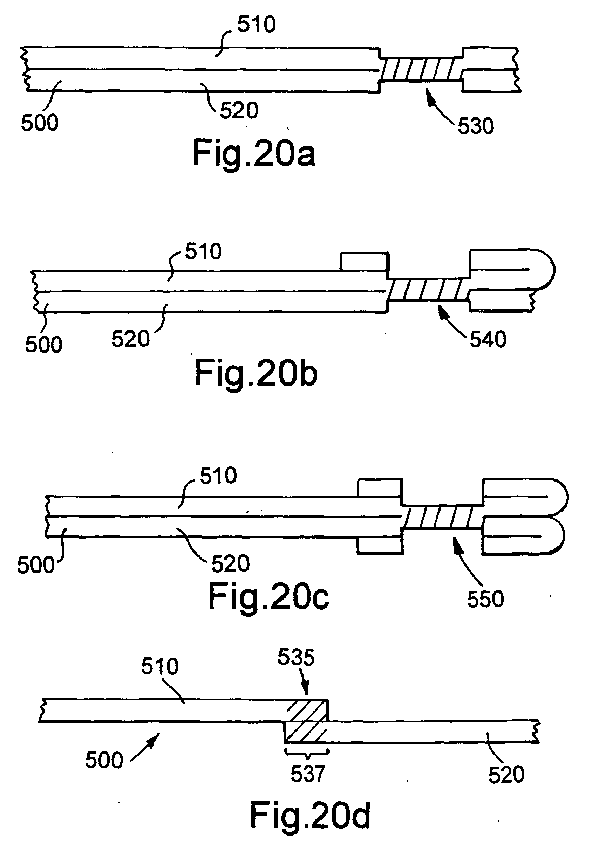

Figures 20a-c show several versions of seam construction which may be accomplished with the present invention.

Figure 20a shows a sheeting 500 comprised of two fabric layers 510 and 520 joined together by an ultrasonically formed seam 530 consisting of the two bonded fabric layers 510 and 520.

Figure 20b also shows a two fabric layer sheeting 500, but seam 540 is formed from three bonded fabric layers formed by the top layer 510 being folded back on itself before bonding the layers 510 and 520 together.

Figure 20c shows a two fabric layer sheeting which has a four fabric layer seam 550 formed by the top layer 510 and the bottom layer 520 being folded back on themselves before bonding the layers 510 and 520 together.

Figure 20d shows a seam construction, which is not part of the present invention, showing a two fabric layer sheeting 500 comprised of two fabric layers 510 and 520 in a partially overlapped relationship to one another. The fabric layers 510 and 520 are joined together by an ultrasonically formed seam 535 at the overlap region 537 of the fabric layers 510 and 520.

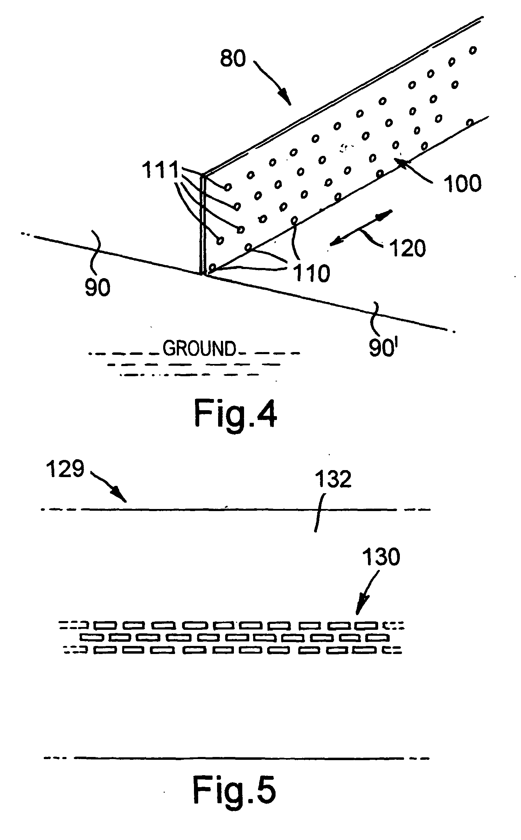

Figure 4 shows in detail the construction of a seam which is like seam 530 of Figure 20a, generally designated 80, as formed by the process illustrated in Figure 3a. The seam 80 may be described as an upstanding seam, although, of course it may not project upwardly, as shown, but may lie on one side or may indeed be downstanding.

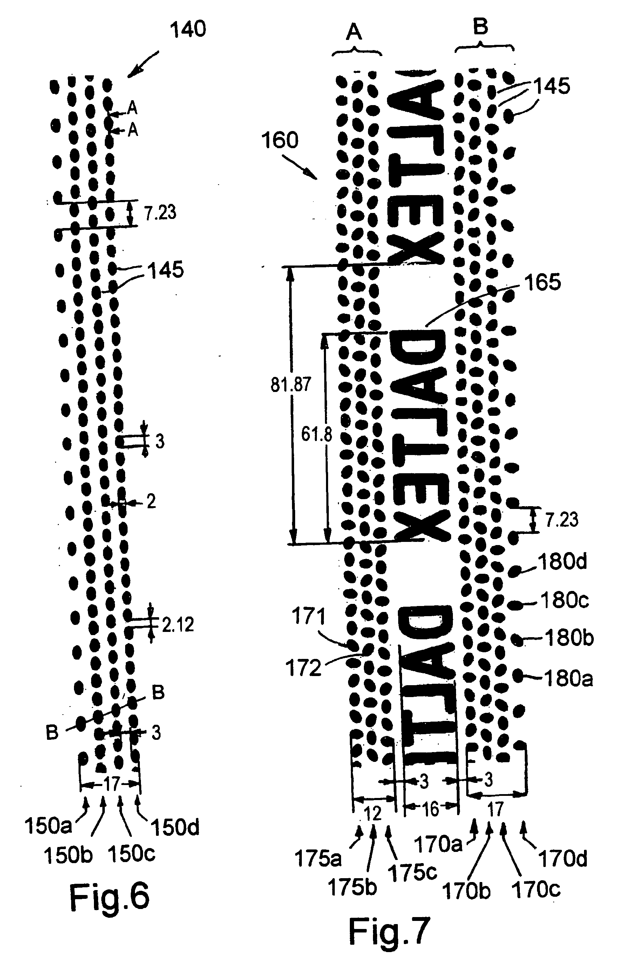

As shown the seam 80 is comprised of one fabric sheet 90 on one side which is joined to another fabric sheet 90' on another side. A bond pattern, generally designated 100 is indicated, which is substantially the same as that shown in Fig. 6. The pattern 100 is composed of individual emboss bonded points 110, 111 and those labelled 110 are spaced at a lower frequency in the direction of arrow 120 than other emboss points 111.

Figure 5 shows a three stitch weld pattern 130 applied to a seam, generally designated 129, of a two layer spunbond laminate fabric 132. The bonding pattern 130 is formed from raised portions or islands on the ultrasonic welding wheel pressing onto the fabric 132 while bonding is progressing. The three stitch weld pattern 130 provides a strong and durable seam 129 because the fibres of the fabric 132 are not fixed into any one position like in a solid bar weld seam (not shown). This allows the fabric 132 about the seam 129 to "give" somewhat when subjected to a shearing force which ensures the seam 129 is less likely to tear when subjected to stresses.

Figure 6 shows a discontinuous pattern of raised engraving emboss islands, generally designated 140, comprising of oval emboss islands 145. The pattern 140 comprises four substantially parallel lines 150a - 150d of emboss islands, and as shown, line 150a has adjacent emboss islands spaced apart at around twice the distance than those in lines 150b-150d.

Furthermore, clearly shown, the emboss islands 145 in the pattern 140 all have the same orientation, so that a long axis of each island is aligned substantially parallel to a long axis of the pattern 140. The lines 150a-150d of islands 145 are arranged so that the islands in one line, e.g. 150b are off-set to those in an adjacent line e.g. 150c.

Figure 7 shows a series of emboss islands 145 which are arranged as a bond pattern, generally designated 160. The islands 145 are substantially oval and are arranged as series A and series B, separated by an engraved island logo 165 running inbetween the series A and B. Series B comprises four substantially parallel lines 170a-170d of emboss islands 145, whereas series A comprises three substantially parallel lines 175a-175c of emboss islands 145. The islands 145 in both series A and B are transversely off-set with respect to adjacent emboss islands 145 and in an adjacent line, for example, island 171 is transversely off-set with respect to island 172.

It is noted that within each of lines 175a-175c or 170a-170d of series A or series B respectively, the emboss islands 145 are rotated by 45° with respect to the next island. For example, emboss island 180b is rotated by 45° with respect to emboss island 180a, emboss island 180c is rotated by 45° with respect to emboss island 180b, and emboss island 180d is rotated by 45° with respect to emboss island 180c. The rotation is in the same direction for all emboss islands 145 in the series.

The emboss islands in line 170d are spaced at around twice the distance between those in the other lines 170a-c and 175a-c.

The emboss islands logo 165, which may comprise a Trade Mark, is provided by a suitably shaped embossing wheel which also carries the emboss islands.

The engraved patterns shown in Figures 6 and 7 when impressed into a fabric during a seam forming operation, provide a strong and durable seam (not shown) because the fibres of the fabric are not fixed into any one position like in a solid bar weld seam (not shown). This allows the fabric about the seam to "give" somewhat when subjected to a shearing force, which ensures the seam is less likely to tear when subjected to stresses.

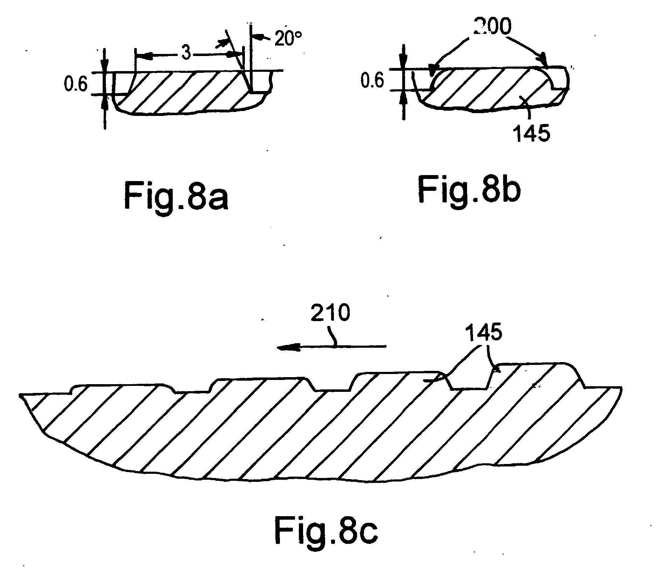

Figure 8b is a cross-sectional view of a single emboss island 145, e.g. as indicated by line A-A on Figure 6.

Figure 8a shows a cross-sectional view of an alternative bond island.

It can be seen that the emboss island 145 of Figure 8b has curved edges indicated by arrow 200 which may help in providing a bonded point (not shown) in a fabric (not shown) which is less likely to tear or is less damaged as compared to bond points formed by the profile of emboss island shown in Figure 8a.

Figure 8c shows a schematic cross-sectional profile of engraving emboss islands 145 taken across the engraving emboss island pattern 140 of Figure 6 along line B-B. It can be clearly seen that the height of the emboss islands 145 decreases in the direction of arrow 210. Thus the point welding in a fabric (not shown) by line 150a of emboss islands of Figure 6 will be the least deeply embossed, with line 150d of emboss islands giving the most deeply embossed welding in the fabric.

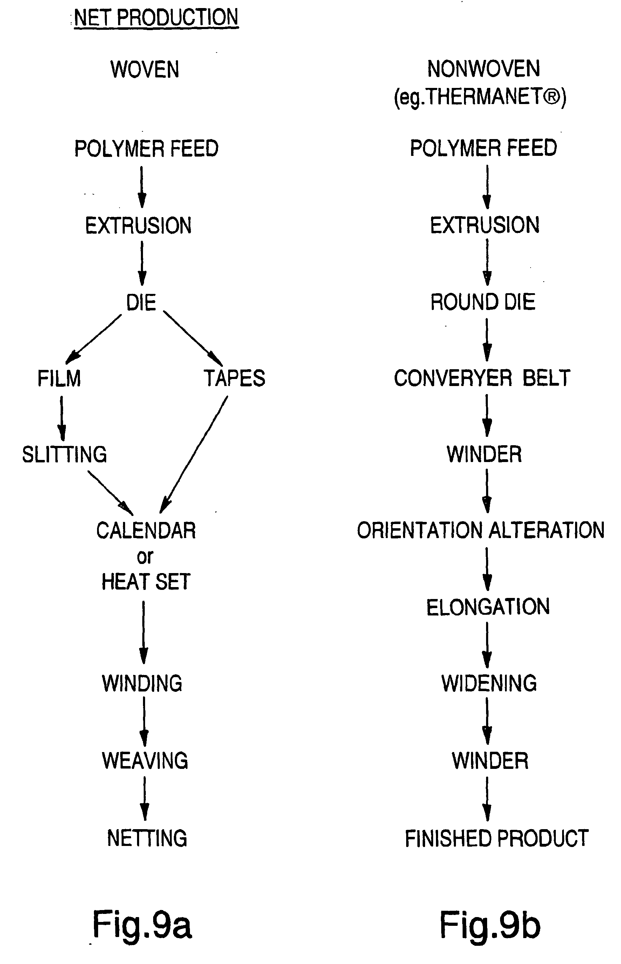

Referring now to Figure 9a, there is shown a flow diagram for producing a woven net for use in a sheeting according to an embodiment of the present invention. Polypropylene granules are blown from a storage silo and fed into a holding hopper, from which they are fed into a mixing hopper and then into the extruder. Additives, (such as colour masterbatch, UV stabilizer, heat stabilizer and/or chalk) can be fed into separate dosing units and then into the common mixing hopper where they mix with the polypropylene granules to form a blend before being fed into the extruder.

The polypropylene or blend is then fed into an extruder and through a die to form as either a film or fibres depending on the type of die used. If a film is formed, it can be slit with blades to form tapes. If fibres are formed, they are drawn into tapes. The tapes are then either calender treated or heat set and then wound. The tapes are then woven into netting using weaving looms.

Figure 9b shows steps for producing a non-woven net for use in a sheeting according to an embodiment of the present invention. Polymer feed, usually as polypropylene, is taken from storage and fed into an extruder hopper and then into a round die. The polymer feed is forced through the round die by means of a melt pump. Oscillations of the die facilitate the formation of a netting which forms as a tube which is then slit so that a flat net sheet forms. The net mesh is then deposited onto a conveyor belt and then wound up into a roll. The roll is then unwound and the net sheet is elongated and widened by a number of rollers and the resultant net is re-rolled to give the finished product.

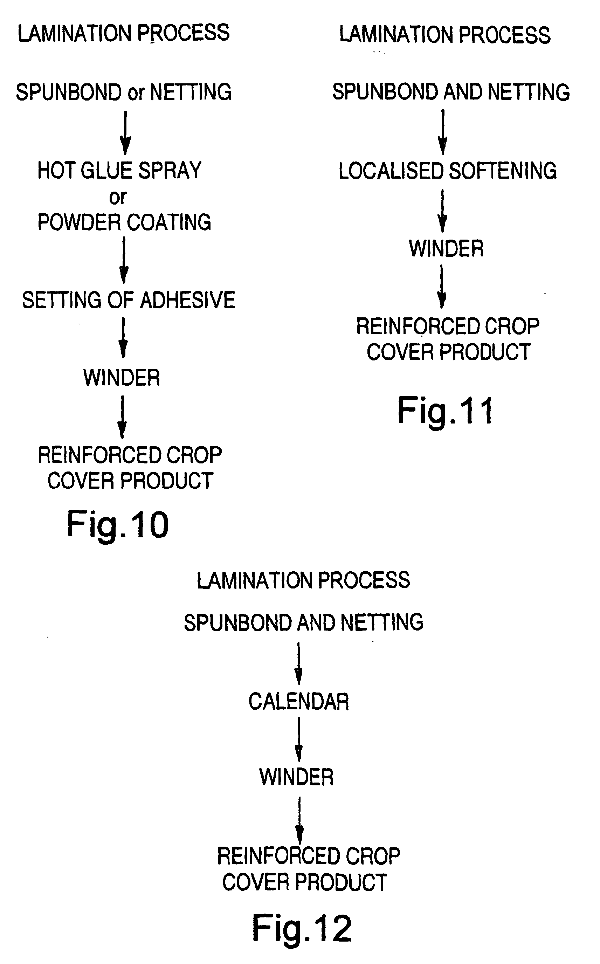

Figure 10 shows steps for laminating a spun bond fabric to a net using an adhesive so as to form a sheet part for use in a sheeting according to the present invention. The adhesive may be applied to either the net or the spunbond material either as a hot glue spray which sets as it cools, or powder coating which is heat and pressure activated. Alternatively, an adhesive may be coextruded with the netting material during its manufacture.

The spunbond fabric and net are then brought together and passed through bonding machinery such as a heated calender to fix the two layers together, thus giving a reinforced sheet part.

Figure 11 shows steps to bond a net to a spunbonded fabric by means of ultrasonic bonding so as to form a sheet part for use in a sheeting according to an embodiment of the present invention. The steps are essentially the same as for bonding two layers of spunbonded fabric. The netting is overlapped substantially completely with the spunbond fabric so that the two layers substantially coincide. The assembly is then fed into the ultrasonic bonding apparatus where local softening of the net and spunbond fabric occurs. The net and spunbond then bond to each other and the laminate is then wound onto a winder to give a sheet part which is reinforced with a net.

Figure 12 illustrates steps for producing a sheet part or reinforced cover product for use in a sheeting according to an embodiment of the present invention by bonding together a spunbond material and netting using a calender. This is a useful technique when the spunbond and netting materials have similar melting points because they are bonded using heat and pressure applied by the calender.

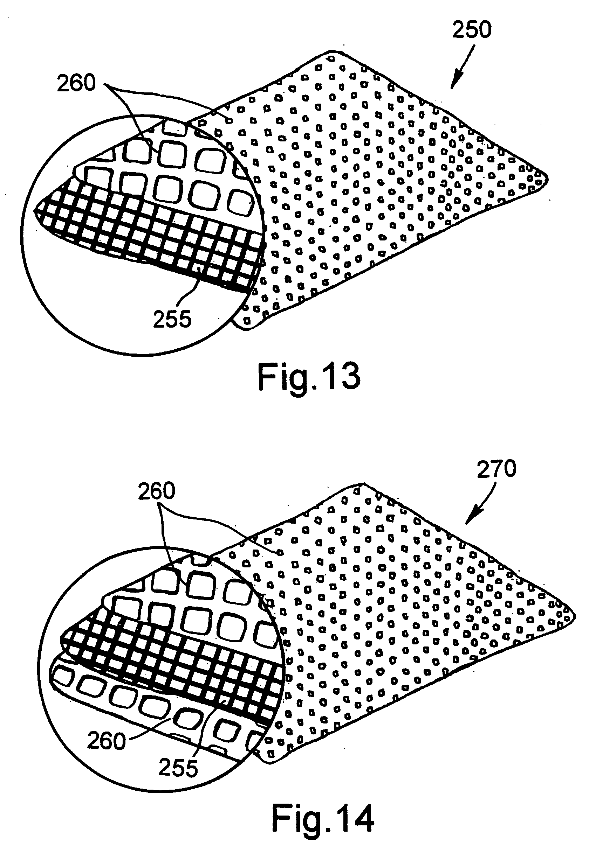

A sheet part for use in a sheeting according to an embodiment of the present invention is shown in Figure 13, the sheet part comprising a two layer net/spunbond laminate 250. Figure 13 includes a magnified portion of the sheet part represented by the circled area. The net 255 and spunbond fabric 260 are laminated by the ultrasonic bonding method to form a single sheet of laminate material 250.

Another sheet part for use in a sheeting according to an embodiment of the present invention is shown in Figure 14, the sheet part comprising three layer laminate 270. The sheet part comprises two layers of spunbond fabric 260 sandwiching a net 255. The fabric layers 260 and net 255 are bonded together effectively by use of the ultrasonic technique to give a single sheet of laminate material 270.

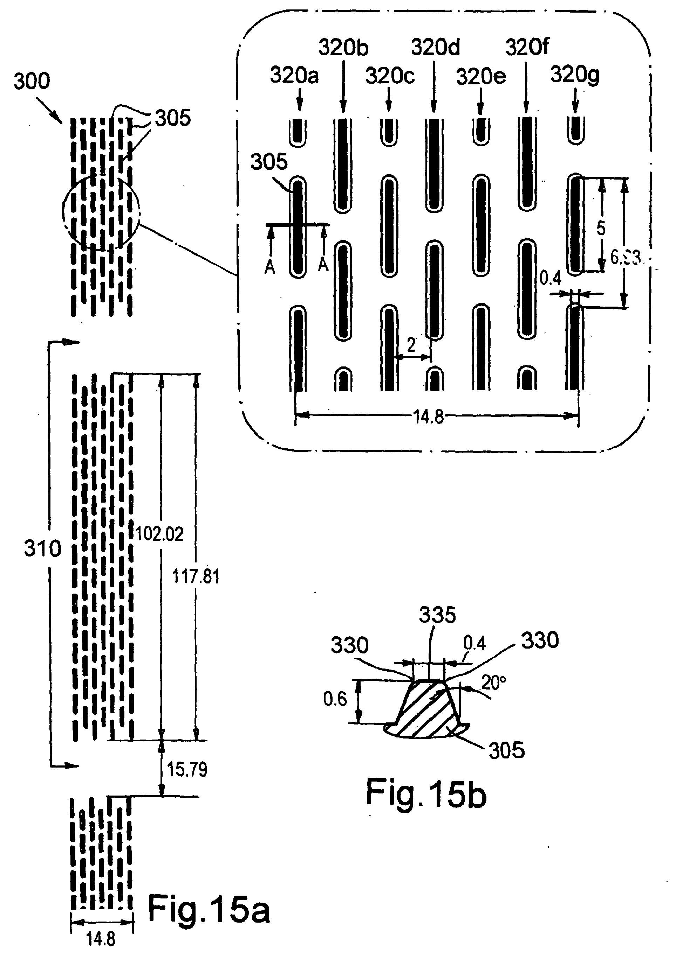

Figure 15a shows a series of engraving elongate raised emboss islands 305, viewed from above, in a discontinuous pattern, generally designated 300, for use in formation of a sheeting according to an embodiment of the present invention. The pattern 300 includes intermittent flat or non-raised regions shown as breaks 310 in the pattern 300. The circled portion of Figure 15a is shown to an enlarged scale.

The emboss islands 305 of Figure 15a are arranged in seven lines 320a-g and the emboss islands 305 in one line 320a-g are off-set to those in an adjacent line 320a-g. The islands in every other line, that is, lines 320a, 320c, 320e and 320g or 320b, 320d and 320f are not off-set to each other.

Figure 15b shows a cross-sectional view of a single emboss island 305 along line A-A in the enlarged scale portion of Figure 15a. It is noted that the edges 330 of the emboss island are not sharp, but are smooth or curved.

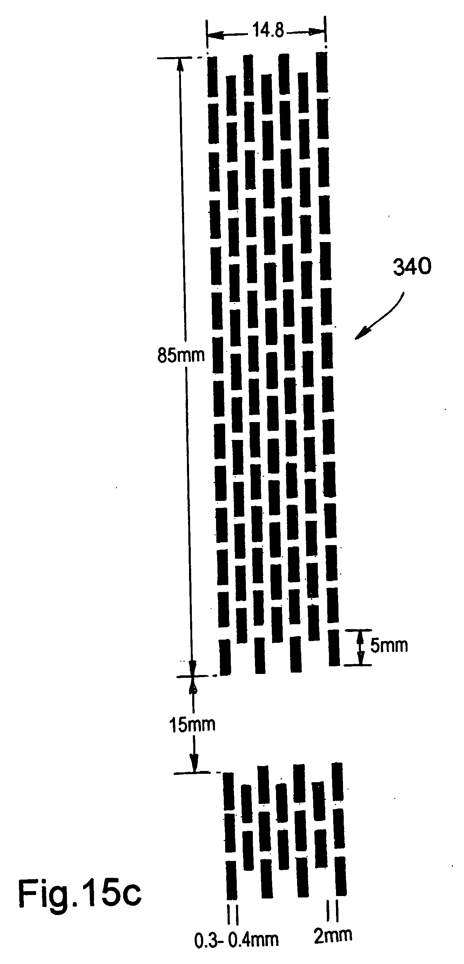

Figure 15c shows a pattern 340 produced in a fabric seam (not shown) after bonding using the engraved island pattern 300 of Figure 15a.

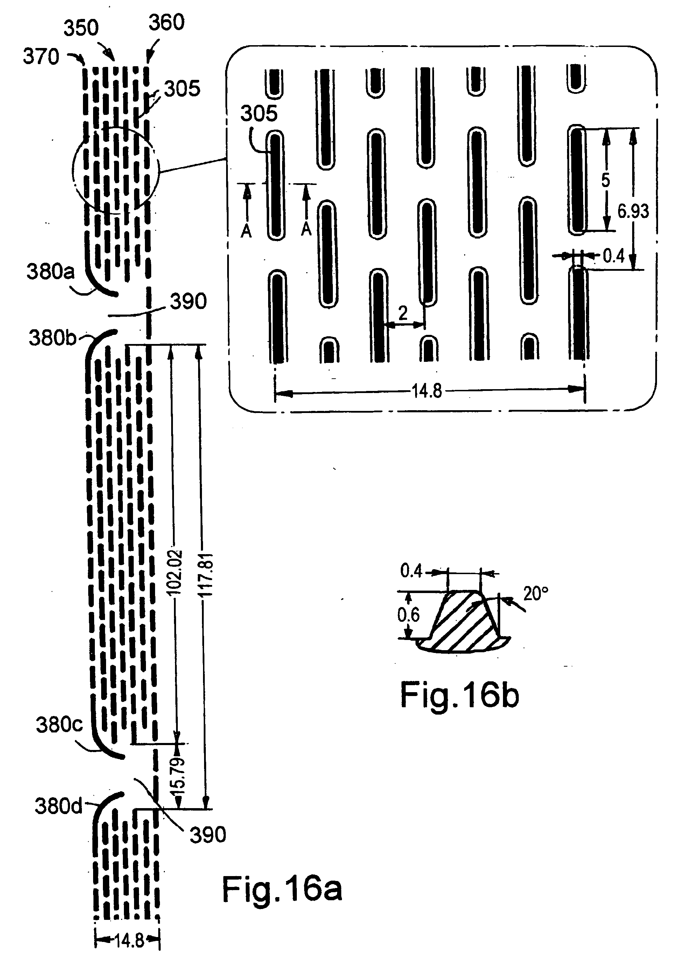

Figure 16a shows a series of engraving emboss islands 305 in a pattern, generally designated 350. This pattern 350 is substantially the same as pattern 300 of Figure 15a except that the pattern 350 is not fully interrupted, the pattern 350 being joined by uninterrupted line 360 of emboss islands 305. Also, a line 370 distal from line 360 contains bond islands 380a-d which are curved, and lead into flat or non-raised areas 390.

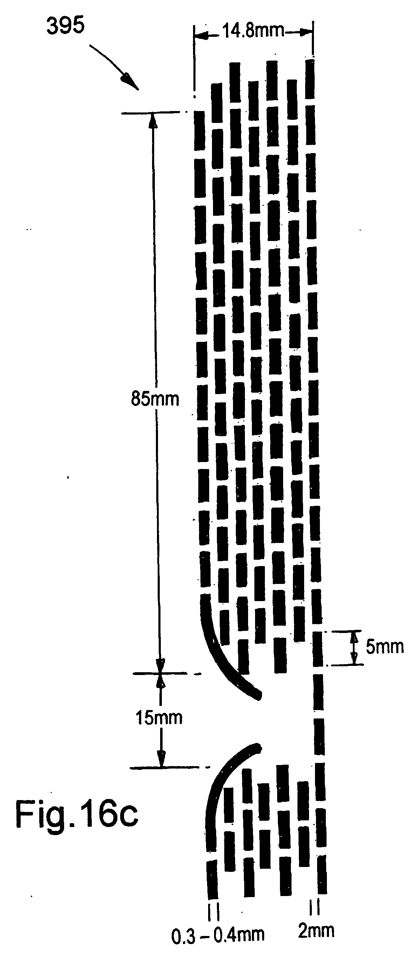

Figures 16b and 16c respectively show a cross-sectional view of a single emboss island 305 along line A-A of Figure 16a, and the bond pattern 395 produced in a fabric seam (not shown) after bonding with the engraving emboss island pattern 350 of Figure 16a.

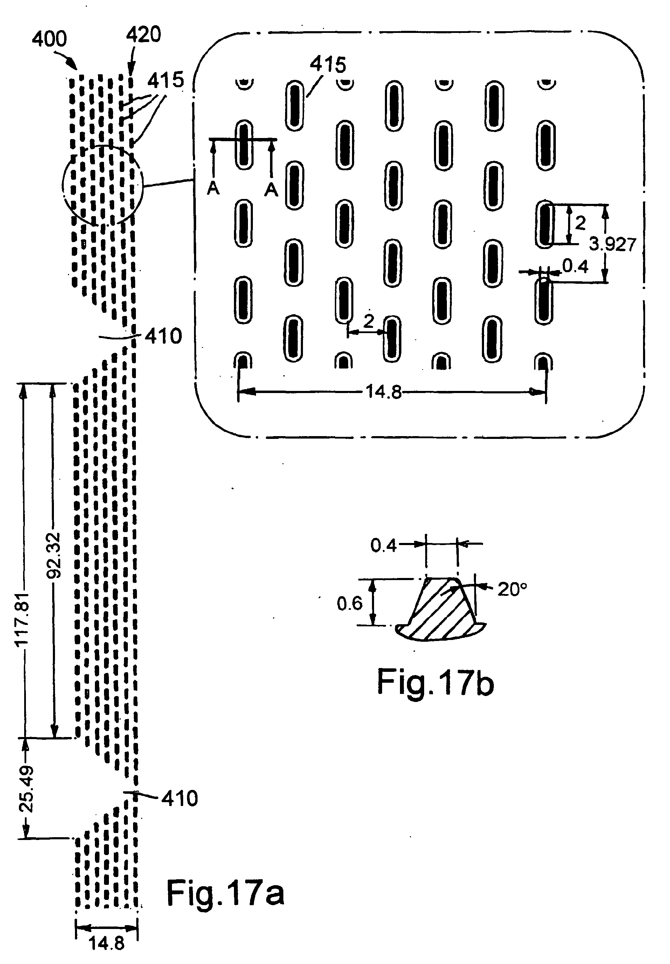

Figure 17a shows an alternative engraving bond island pattern 400 which is similar to patterns 300 and 350 in Figures 15a and 16a respectively.

Flat or non-raised regions 410 of the pattern 400 are shaped so that they taper towards a line 420 of bond islands 415, which is uninterrupted.

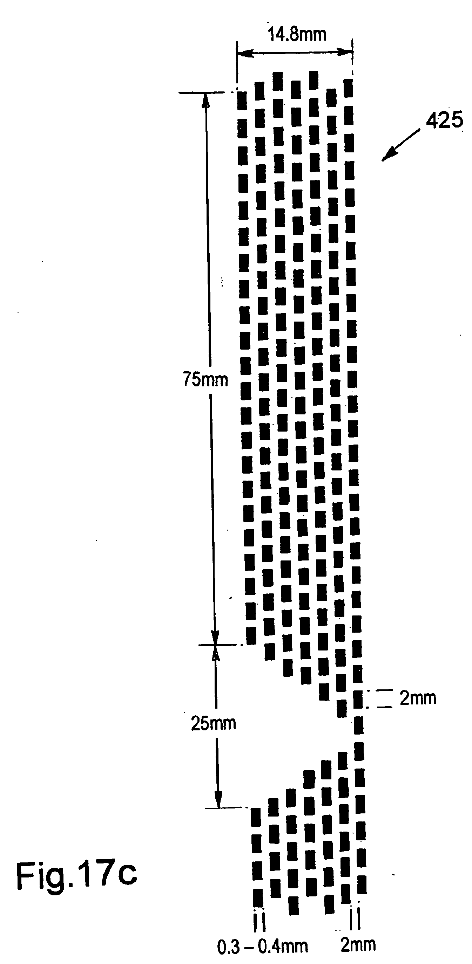

Figure 17b shows a cross-sectional view of a single emboss island along line A-A on Figure 17a, and Figure 17c shows a pattern 425 produced in a fabric seam (not shown) by engraving emboss island pattern 400.

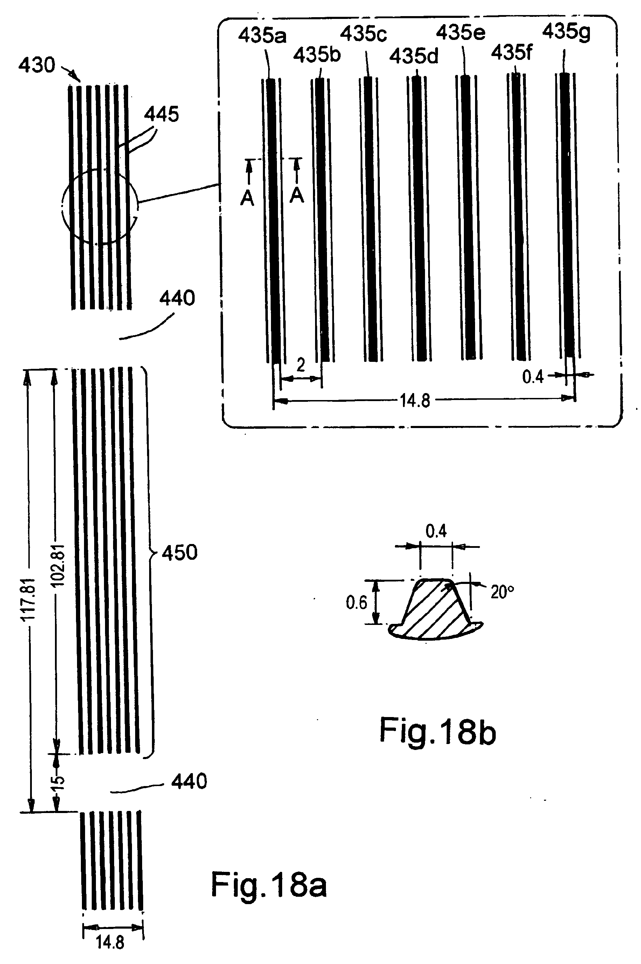

Figure 18a shows an alternative elongate bar pattern 430 interrupted by flat or non-raised regions 440. The pattern 430 consists of regions 450 containing seven lines 435a-g of solid bar emboss islands 445 which are not off-set one from the other.

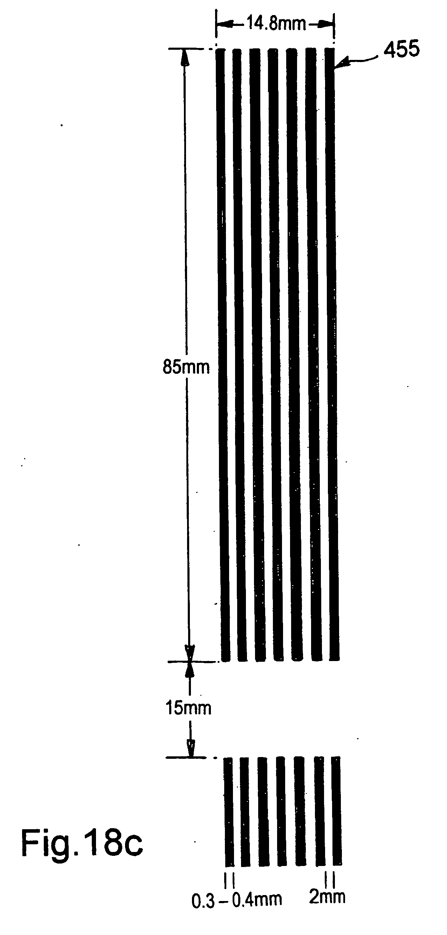

Figure 18b shows a cross-sectional view along line A-A of Figure 18a, and Figure 18c shows a pattern 455 produced in a fabric seam (not shown) when bonded using the engraving emboss island pattern 430 of Figure 18a.

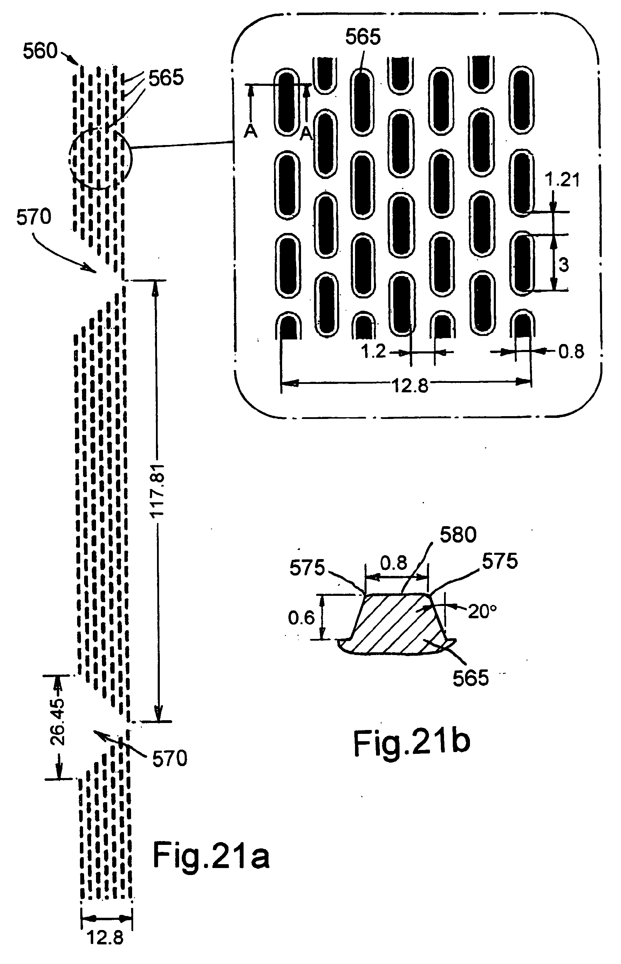

Figure 21a shows another example of a series of engraving elongate raised emboss islands 565, viewed from above, in a discontinuous pattern, generally designated 560, for use in formation of a sheeting according to an embodiment of the present invention. The pattern 560 includes flat or non-raised regions shown as breaks 570 in the pattern 565. The circled portion of Figure 21a is shown to an enlarged scale. Pattern 560 is similar to pattern 300 shown in Figure 15a.

Figure 21b shows a cross-sectional view of a single emboss island 565 along line A-A in the enlarged scale portion of Figure 21a. It is noted that the edges 575 of the emboss island are not sharp, but are smooth or curved. It is also noted that a face 580 of the island 565 is wider than the corresponding face 335 of island 305 in Figure 15b.

It should be understood that the above embodiments are not limiting on the invention described herein and other embodiments may be envisaged. For example any number of layers of spunbond and/or net may be bonded using the ultrasonic methods described herein to produce reinforced sheeting. In particular the method may be used to produce construction fabrics and geotextiles.

## Claims

1. A sheeting (50;500) which is an agricultural crop protection cover, ground cover, geotextile or construction fabric, the sheeting comprising at least two sheet form members (12, 14 ; 90, 90' ; 510 ; 520) at least partly joined one to the other by an ultrasonically bonded seam (530 ; 540 ; 550 ; 80 ; 129), wherein each sheet form member has first and second opposing surfaces, wherein portions of the first surfaces of the first and second sheet form members are joined at or near respective edges to form the ultrasonically bonded seam, further portions of the first surfaces of the first and second sheet form members forming at least part of a first surface of the sheeting, and further portions of the second surfaces of the first and second sheet form members forming at least part of a second surface of the sheeting, and wherein further the seam depends from the second surface of the sheeting.

2. A sheeting as claimed in claim 1, wherein the seam is upstanding or downstanding or lies on one side.

3. A sheeting according to claim 1, wherein portions of the first or second surfaces of the first and second sheet form member provide first and second outer surfaces of the first seam and neither first nor second outer surfaces of the first seam are joined with the second surface of the sheeting, surface to surface.

4. A sheeting according to any of claims 1 to 3, wherein each sheet form member of the sheeting comprises a nonwoven fabric, the nonwoven fabric being a spunbonded fabric (132; 260).

5. A sheeting according to any of claims 2 to 4, wherein the respective edges comprise long edges of the first and second sheet form members, and wherein the first seam comprises a folded portion of at least one of the first or second sheet form members such that the first seam comprises at least three layers.

6. A sheeting according to claim 5, wherein the first seam comprises three or four layers.

7. A sheeting according to any preceding claim, wherein the sheeting is an agricultural crop protection cover.

8. A sheeting according to any preceding claim, wherein the agricultural crop protection cover is a plant or seed row protection cover.

9. A sheeting according to claim 8, wherein the cover is a lettuce crop protection cover.

10. A sheeting according to any preceding claim, wherein the sheeting is a ground cover, geotextile or construction fabric such as a roofing underlay or housewrap.

11. A sheeting according to any preceding claim, wherein the sheeting comprises a plastic polymeric material.

12. A sheeting according to claim 11, wherein the plastic polymeric material is a polyolefin.

13. A sheeting according to claim 12, wherein said polyolefin is chosen from polypropylene, polyethylene or mixtures and copolymers thereof.

14. A sheeting according to claim 4 or any of claims 5 to 13 when dependent upon claim 4, wherein each sheet form member of the sheeting further comprises a film and/or a net.

15. A sheeting according to claim 4, wherein said spunbonded fabric is a polypropylene nonwoven spunbonded fabric.

16. A sheeting according to any preceding claim, wherein the sheeting comprises a laminate of two or more layers.

17. A sheeting according to claim 14 or either of claims 15 or 16 when dependent upon claim 14, wherein said film and/or net reinforces an edge of the sheeting.

18. A sheeting according to any preceding claim, wherein each sheet form member is substantially rectangular in shape.

19. A sheeting according to claim 18, wherein a long edge of each rectangular sheet form member is of a length of between 10 metres to 500 metres.

20. A sheeting according to claim 19, wherein said long edge has a length of between 10 metres to 250 metres.

21. A sheeting according to any preceding claim, wherein each sheet form member has a width of 2.4 metres to 3.2 metres.

22. A sheeting according to any preceding claim comprising more than two sheet form members, each sheet form member being joined to an adjacent part by an ultrasonically bonded seam.

23. A sheeting according to any of claims 1 to 22, wherein the sheeting comprises first, second and third sheet form members (12,14,15), the third sheet form member having a first surface and a second surface, wherein portions of the second surfaces of the second and third sheet form members are joined at or near respective edges to form a second ultrasonically bonded seam, further portions of the second surfaces of the second and third sheet form members forming at least part of a second surface of the sheeting, and further portions of the first surfaces of the second and third sheet form members forming at least part of a first surface of the sheeting, wherein further the second seam depends from the first surface of the sheeting.

24. A sheeting according to claim 23, further comprising a fourth sheet form member (16) joined to the third sheet form member by a third ultrasonically bonded seam arranged in a similar manner to the first seam.

25. A sheeting according to claim 24, further comprising a fifth sheet form member (17) joined to the fourth sheet form member by a fourth ultrasonically bonded seam arranged in a similar manner to the second seam.

26. A sheeting according to any preceding claim, wherein said ultrasonically bonded seam is produced by bonding comprising solid bar bonding and/or intermittent bonding.

27. A sheeting according to claim 26, wherein said bonding is intermittent bonding comprising a series of bond areas comprising embossed bond areas.

28. A sheeting according to claim 27, wherein said bond areas have a shape selected from rectangular, square, solid line or elongate bar shape or combinations thereof.

29. A sheeting according to claim 27 or claim 28, wherein said bond areas have a curved outer boundary.

30. A sheeting according to claim 29, wherein said bond areas have a shape selected from elongate bar, circular, oval and elliptical.

31. A sheeting according to any of claims 27 to 30, wherein a plurality of bond areas are arranged as at least one substantially straight line.

32. A sheeting according to claim 31, wherein a number of substantially parallel spaced lines of bond areas is provided.

33. A sheeting according to claim 32, wherein said lines of bond areas are formed substantially parallel to respective adjacent edges of the at least two sheet form members.

34. A sheeting according to claim 33, wherein said bond areas of any given line are spaced substantially equally one from the other.

35. A sheeting according to claim 34, wherein the bond areas in any one line are all of substantially the same shape.

36. A sheeting according to any of claims 31 to 35, wherein a bond area in any one particular line is rotated with respect to an adjacent bond area in said one particular line with reference to an edge of at least one of the at least two parts by 45°.

37. A sheeting according to claim 36, wherein every fourth bond area in any given line has substantially the same orientation with respect to a particularly defined axis giving a regular repeat pattern along the line of bond areas.

38. A sheeting according to any of claims 31 to 37, wherein the plurality of bond areas comprises a plurality of substantially parallel adjacent lines of regularly spaced bond areas.

39. A sheeting according to any of claims 32 to 38, wherein the bond areas in a particular line of bond areas are aligned or off-set with respect to bond areas in an adjacent line of bond areas.

40. A sheeting according to any one or claims 32 to 39, wherein adjacent bond areas of at least one line are spaced apart at a lower frequency or density than the spacing of the bond areas of another line(s).

41. A sheeting according to claim 40, wherein said spaced apart bond areas are spaced at around twice the distance of the another bond areas.

42. A sheeting according to claim 41, wherein the at least one line of spaced apart bond areas is an outer or inner line of the plurality of lines.

43. A sheeting according to claim 42, wherein an outer or inner line comprises bond areas which are embossed less deeply than other bond areas in a series of lines.

44. A sheeting according to claim 43, wherein a line of bond areas adjacent to the at least one line of further spaced apart bond areas is embossed more deeply than the at least one line of further spaced apart bond areas, and the next adjacent line of bond areas is bonded more deeply than the line of bond areas adjacent to the at least one line of further spaced apart bond areas, to give a progression of more deeply bonded areas across the bonded seam.

45. A sheeting according to any of claims 31 to 44, wherein at least one line of bond areas is interrupted by at least one unbonded region or portion providing a gap in the at least one line.

46. A sheeting according to claim 45, wherein more than one gap is provided and the gaps are spaced substantially equally one from the other.

47. A sheeting according to claim 45 or claim 46, wherein a bond adjacent a gap in a line of bond areas is curved.

48. A sheeting according to claim 47, wherein said curved bond area extends longitudinally and transversely into the gap in a direction not parallel to the line of bond areas from which the curved bond area extends.

49. A sheeting according to any of claims 27 to 48, wherein the series of bond areas further comprise a bonded region or regions which provide display means.

50. A sheeting according to claim 49, wherein said bonded regions are additionally provided by calendering or gluing.

51. A sheeting according to claim 49 or claim 50, wherein said bonded regions are provided adjacent to a series of bonded areas.

52. A sheeting according to any preceding claim, wherein said seam comprises a region of between 5mm and 100mm wide.

53. A sheeting according to claim 52, wherein said seam comprises a region of between 15mm and 20mm wide.

54. A sheeting according to any of claims 1 to 24, wherein said seam is selected from an upstanding or a downstanding seam.

55. A sheeting according to any preceding claim, having a width of between 6 metres and 16 metres.

56. A sheeting according to any preceding claim, which is foldable as a concertinered sheet prior to use.

57. A sheeting according to claim 56, which is provided in roll form.

58. A method of forming a sheeting which is an agricultural crop protection cover, ground cover, geotextile or construction fabric, the method comprising the steps of:
providing at least two sheet form members (12,14 ; 90,90' ; 510 ; 520) each sheet form member having first and second opposing surfaces;
placing first surfaces of the at least two sheet form members in longitudinal relation in an intimate contact;
ultrasonically bonding portions of the first surfaces of said at least two sheet form members together at or near respective edges to form a seam which comprises a longitudinal seam such that further portions of the first surfaces of the first and second sheet form members form at least part of a first surface of the sheeting, and further portions of the second surfaces of the first and second sheet form members form at least part of a second surface of the sheeting, and such that the seam depends from the second surface of the sheeting.

59. A method according to claim 58, wherein said seam is formed at or adjacent long edges of the at least two sheet form members.

60. A method according to claim 58 or claim 59, wherein said sheet form members to be bonded are placed in adjacent relationship to one another and then ultrasonically bonded together.

61. A method according to any of claims 58 to 60, comprising the steps of:
i) placing a first sheet form member (10A) in substantially adjacent relationship with a second sheet form member (10B) and bonding said first and second sheet form members together along respective adjacent long edges thereof to form the sheeting having a first ultrasonically bonded longitudinal seam (530;240;550;380;129); and
ii) placing a third sheet form member in substantially adjacent relationship with the second sheet form member and bonding said second and third sheet form members along respective adjacent long edges to form the sheeting having a second ultrasonically bonded longitudinal seam; and
iii) optionally, undertaking step ii) with one or more additional sheet form members (10C ; 10D ; 10E) to form the sheeting having one or more further ultrasonically bonded longitudinal seams.

62. A method according to claim 61, wherein step ii) is carried out twice more to form a sheeting comprising five sheet form members.

63. A method of providing an agricultural crop protection cover, ground cover, geotextile or construction fabric comprising:
providing a sheeting (50;500) according to any of claims 1 to 57 in roll form;
unrolling and unfolding the sheeting.

## Patentansprüche

1. Folie (50; 500), die eine Schutzabdeckung für Feldfrüchte, eine Bodenabdeckung, eine Geotextilie oder ein Baugewebe ist, wobei die Folie mindestens zwei Folienformelemente (12, 14; 90, 90'; 510; 520) aufweist, die zumindest teilweise durch eine ultraschailgeschweißte Naht (530; 540; 550; 80; 129) miteinander verbunden sind, wobei jedes Folienformelement erste und zweite, einander gegenüberliegende Oberflächen aufweist, wobei Abschnitte der ersten und zweiten Folienformelemente an oder nahe entsprechenden Kanten verbunden sind, um die ultraschallgeschweißte Naht zu bilden, wobei weitere Abschnitte der ersten Oberflächen der ersten und zweiten Folienformelemente zumindest einen Teil einer ersten Oberfläche der Folie bilden und weitere Abschnitte der zweiten Oberflächen der ersten und zweiten Folienformelemente zumindest einen Teil einer zweiten Oberfläche der Folie bilden, und wobei ferner die Naht von der zweiten Oberfläche der Folie herabhängt.

2. Folie nach Anspruch 1, wobei die Naht aufwärts oder abwärts vorsteht oder auf einer Seite liegt.

3. Folie nach Anspruch 1, wobei Abschnitte der ersten oder zweiten Oberflächen des ersten und des zweiten Folienformelements erste und zweite Außenflächen der ersten Naht bilden und weder erste noch zweite Außenflächen der ersten Naht mit der zweiten Oberfläche der Folie von Oberfläche zu Oberfläche verbunden sind.

4. Folie nach einem der Ansprüche 1 bis 3, wobei jedes Folienformelement der Folie ein Faservlies aufweist, wobei das Faservlies ein Spinnvlies (132; 260) ist.

5. Folie nach einem der Ansprüche 2 bis 4, wobei die entsprechenden Kanten Längskanten der ersten und zweiten Folienformelemente aufweisen, und wobei die erste Naht einen gefalteten Abschnitt mindestens eines der ersten oder zweiten Folienformelemente aufweist, so daß die erste Naht mindestens 3 Lagen aufweist.

6. Folie nach Anspruch 5, wobei die erste Naht drei oder vier Lagen aufweist.

7. Folie nach einem der vorstehenden Ansprüche, wobei die Folie eine Schutzabdeckung für Feldfrüchte ist.

8. Folie nach einem der vorstehenden Ansprüche, wobei die Schutzabdeckung für Feldfrüchte eine Schutzabdeckung für Pflanz- oder Saatreihen ist.

9. Folie nach Anspruch 8, wobei die Abdeckung eine Salat-Schutzabdeckung ist.

10. Folie nach einem der vorstehenden Ansprüche, wobei die Folie eine Bodenabdeckung, Geotextilie oder ein Baugewebe ist, wie z. B. eine Bedachungsunterlage oder eine Hausumhüllung.

11. Folie nach einem der vorstehenden Ansprüche, wobei die Folie einen plastischen Polymerwerkstoff aufweist.

12. Folie nach Anspruch 11, wobei der plastische Polymerwerkstoff ein Polyolefin ist.

13. Folie nach Anspruch 12, wobei das Polyolefin unter Polypropylen, Polyethylen oder deren Gemischen und Copolymeren ausgewählt ist.

14. Folie nach Anspruch 4 oder einem der Ansprüche 5 bis 13 in Abhängigkeit von Anspruch 4, wobei jedes Folienformelement der Folie ferner einen Film und/oder ein Netzgewebe aufweist.

15. Folie nach Anspruch 4, wobei das Spinnvlies ein Polypropylen-Spinnvlies ist.

16. Folie nach einem der vorstehenden Ansprüche, wobei die Folie ein Laminat aus zwei oder mehr Lagen aufweist,

17. Folie nach Anspruch 14 oder einem der beiden Ansprüche 15 oder 16 in Abhängigkeit von Anspruch 14, wobei der Film und/oder das Netzgewebe eine Kante der Folie verstärkt.

18. Folie nach einem der vorstehenden Ansprüche, wobei jedes Folienformelement von im wesentlichen rechteckiger Form ist.

19. Folie nach Anspruch 18, wobei eine Längskante jedes rechteckigen Folienformelements eine Länge zwischen 10 und 500 Meter aufweist

20. Folie nach Anspruch 19, wobei die Längskante eine Länge zwischen 10 und 250 Meter aufweist.

21. Folie nach einem der vorstehenden Ansprüche, wobei jedes Folienformelement einer Breite von 2,4 Meter bis 3,2 Meter aufweist.

22. Folie nach einem der vorstehenden Ansprüche, die mehr als zwei Folienformelemente aufweist, wobei jedes Folienformelement mit einem angrenzenden Teil durch eine ultraschallgeschweißte Naht verbunden ist.

23. Folie nach einem der Ansprüche 1 bis 22, wobei die Folie erste, zweite und dritte Folienformelemente (12, 14, 15) aufweist, wobei das dritte Folienformelement eine erste und eine zweite Oberfläche aufweist, wobei Abschnitte der zweiten Oberflächen des zweiten und des dritten Folienformelements an oder nahe entsprechenden Kanten verbunden sind, um eine zweite ultraschallgeschweißte Naht zu bilden, wobei weitere Abschnitte der zweiten Oberflächen der zweiten und dritten Folienformelemente zumindest einen Teil einer zweiten Oberfläche der Folie bilden, und wobei weitere Abschnitte der ersten Oberflächen der zweiten und dritten Folienformelemente zumindest einen Teil einer ersten Oberfläche der Folie bilden, wobei ferner die zweite Naht von der ersten Oberfläche herabhängt.

24. Folie nach Anspruch 23, die ferner ein viertes Folienformelement (16) aufweist, das mit dem dritten Folienformelement durch eine dritte ultraschallgeschweißte Naht verbunden ist, die ähnlich wie die erste Naht angeordnet ist.

25. Folie nach Anspruch 24, die ferner ein fünftes Folienformelement (17) aufweist, das mit dem vierten Folienformelement durch eine vierte ultraschallgeschweißte Naht verbunden ist, die ähnlich wie die zweite Naht angeordnet ist.

26. Folie nach einem der vorstehenden Ansprüche, wobei die ultraschallgeschweißte Naht durch Schweißen erzeugt wird, das kontinuierliches Schweißen und/oder intermittierendes Schweißen aufweist.

27. Folie nach Anspruch 26, wobei das Schweißen intermittierendes Schweißen mit einer Reihe von Schweißflächen aufweist, die geprägte Schweißflächen aufweisen.

28. Folie nach Anspruch 27, wobei die Schweißflächen eine Form haben, die unter rechteckiger, quadratischer, Vollinien- oder langgestreckter Stabform oder Kombinationen davon ausgewählt ist.

29. Folie nach Anspruch 27 oder Anspruch 28, wobei die Schweißflächen einen gekrümmten äußeren Rand aufweisen.

30. Folie nach Anspruch 29, wobei die Schweißflächen eine Form aufweisen, die unter einer langgestreckten Stabform, runden, ovalen und elliptischen Form ausgewählt ist.

31. Folie nach einem der Ansprüche 27 bis 30, wobei mehrere Schweißflächen als mindestens eine im wesentlichen gerade Reihe angeordnet sind.

32. Folie nach Anspruch 31, wobei eine Anzahl von im wesentlichen parallelen beabstandeten Reihen von Schweißflächen bereitgestellt wird.

33. Folie nach Anspruch 32, wobei die Schweißflächenreihen im wesentlichen parallel zu entsprechenden benachbarten Kanten der mindestens zwei Folienformelemente ausgebildet sind.

34. Folie nach Anspruch 33, wobei die Schweißflächen irgendeiner gegebenen Reihe im wesentlichen in gleichen Abständen voneinander angeordnet sind.

35. Folie nach Anspruch 34, wobei die Schweißflächen in irgendeiner Reihe alle im wesentlichen von der gleichen Form sind.

36. Folie nach einem der Ansprüche 31 bis 35, wobei eine Schweißfläche in einer bestimmten Reihe gegen eine benachbarte Schweißfläche in der einen bestimmten Reihe bezüglich einer Kante mindestens eines der mindestens zwei Teile um 45° gedreht wird.

37. Folie nach Anspruch 36, wobei jede vierte Schweißfläche in irgendeiner gegebenen Reihe im wesentlichen die gleiche Ausrichtung in Bezug auf eine besonders definierte Achse aufweist, wodurch entlang der Reihe von Schweißflächen ein regelmäßiges Wiederholungsmuster entsteht.

38. Folie nach einem der Ansprüche 31 bis 37, wobei die Vielzahl von Schweißflächen mehrere im wesentlichen parallele benachbarte Reihen von regelmäßig beabstandeten Schweißflächen aufweist.

39. Folie nach einem der Ansprüche 32 bis 38, wobei die Schweißflächen in einer bestimmten Reihe von Schweißflächen auf Schweißflächen in einer benachbarten Reihe von Schweißflächen ausgerichtet oder gegen diese versetzt sind.

40. Folie nach einem der Ansprüche 32 bis 39, wobei benachbarte Schweißflächen mindestens einer Reihe mit einer niedrigeren Häufigkeit oder Dichte beabstandet sind als die Schweißflächen einer oder mehrerer anderer Reihen.

41. Folie nach Anspruch 40, wobei die beabstandeten Schweißflächen in Abständen angeordnet sind, die etwa zweimal so groß sind wie die Abstände der anderen Schweißflächen.

42. Folie nach Anspruch 41, wobei die mindestens eine Reihe von beabstandeten Schweißflächen eine äußere oder innere Reihe von den mehreren Reihen ist.

43. Folie nach Anspruch 42, wobei eine äußere oder innere Reihe Schweißflächen aufweist, die weniger tief geprägt sind als andere Schweißflächen in einer Serie von Reihen.

44. Folie nach Anspruch 43, wobei eine Reihe von Schweißflächen, die der mindestens einen Reihe von weiter beabstandeten Schweißflächen benachbart ist, tiefer geprägt ist als die mindestens eine Reihe von weiter beabstandeten Schweißflächen, und wobei die nächstbenachbarte Reihe von Schweißflächen tiefer geprägt ist als die der mindestens einen Reihe von weiter beabstandeten Schweißflächen benachbarte Reihe von Schweißflächen, wodurch quer zu der Schweißnaht eine Progression von tieferen Schweißnähten entsteht.

45. Folie nach einem der Ansprüche 31 bis 44, wobei mindestens eine Reihe von Schweißflächen durch mindestens einen unverbundenen Bereich oder Abschnitt unterbrochen wird, der eine Lücke in der mindestens einen Reihe bildet.

46. Folie nach Anspruch 45, wobei mehr als eine Lücke gebildet wird und die Lücken im wesentlichen gleich voneinander beabstandet sind.

47. Folie nach Anspruch 45 oder Anspruch 46, wobei eine Schweißstelle, die in einer Reihe von Schweißflächen an eine Lücke angrenzt, gekrümmt ist.

48. Folie nach Anspruch 47, wobei sich die gekrümmte Schweißfläche in Längs- und Querrichtung in einer Richtung in die Lücke hinein erstreckt, die nicht parallel zu der Reihe von Schweißflächen ist, von welche die gekrümmte Schweißfläche ausgeht.

49. Folie nach einem der Ansprüche 27 bis 48, wobei die Reihe von Schweißflächen ferner einen oder mehrere verbundene Bereiche aufweist, die Hervorhebungsmittel bereitstellen.

50. Folie nach Anspruch 49, wobei die verbundenen Bereiche zusätzlich durch Kalandrieren oder Kleben bereitgestellt werden.

51. Folie nach Anspruch 49 oder Anspruch 50, wobei die verbundenen Bereiche angrenzend an eine Reihe von Schweißflächen bereitgestellt werden.

52. Folie nach einem der vorstehenden Ansprüche, wobei die Naht einen Bereich mit einer Breite zwischen 5 mm und 100 mm aufweist

53. Folie nach Anspruch 52, wobei die Naht einen Bereich mit einer Breite zwischen 15 mm und 20 mm aufweist

54. Folie nach einem der Ansprüche 1 bis 24, wobei die Naht unter einer aufwärts oder abwärts vorstehenden Naht ausgewählt ist.

55. Folie nach einem der vorstehenden Ansprüche, die eine Breite zwischen 6 Meter und 16 Meter aufweist.

56. Folie nach einem der vorstehenden Ansprüche, die vor Gebrauch als zickzackgefaltete Folie faltbar ist.

57. Folie nach Anspruch 56, die in Rollenform bereitgestellt wird.

58. Verfahren zum Formen einer Folie, die eine Schutzabdeckung für Feldfrüchte, eine Bodenabdeckung, eine Geotextilie oder ein Baugewebe ist, wobei das Verfahren die folgenden Schritte aufweist:
Bereitstellen von mindestens zwei Folienformelementen (12, 14; 90, 90'; 510; 520), wobei jedes Folienformelement erste und zweite, einander gegenüberliegende Oberflächen aufweist;
Anordnen der ersten Oberflächen der mindestens zwei Folienformelemente in Längsrichtung in engem Kontakt miteinander;
Ultraschallschweißen von Abschnitten der ersten Oberflächen der mindestens zwei Folientormelemente an oder nahe entsprechenden Kanten, um eine Naht zu bilden, die eine Längsnaht aufweist, so daß weitere Abschnitte der ersten Oberflächen der ersten und zweiten Folienformelemente zumindest einen Teil einer ersten Oberfläche der Folie bilden und weitere Abschnitte der zweiten Oberflächen der ersten und zweiten Folienformelemente zumindest einen Teil einer zweiten Oberfläche der Folie bilden, und daß die Naht von der zweiten Oberfläche der Folie herabhängt.

59. Verfahren nach Anspruch 58, wobei die Naht an oder angrenzend an Längskanten der mindestens zwei Folienformelemente ausgebildet wird.

60. Verfahren nach Anspruch 58 oder Anspruch 59, wobei die zu verbindenden Folienformelemente aneinander angrenzend angeordnet und dann durch Ultraschallschweißen miteinander verbunden werden.

61. Verfahren nach einem der Ansprüche 58 bis 60, das die folgenden Schritte aufweist:
i) Anordnen eines ersten Folienformelements (10A) im wesentlichen angrenzend an ein zweites Folienformelement (10B) und Verbinden der ersten und zweiten Folienformelemente entlang ihren entsprechenden aneinandergrenzenden Längskanten, um die Folie mit einer ersten ultraschallgeschweißten Längsnaht (530; 240; 550; 380; 129) zu formen; und
ii) Anordnen eines dritten Folienformelements im wesentlichen angrenzend an das zweite Folienformelement und Verbinden der zweiten und dritten Folienformelemente entlang entsprechenden aneinandergrenzenden Längskanten, um die Folie mit einer zweiten ultraschallgeschweißten Längsnaht zu formen; und
iii) wahlweise Ausführen von Schritt ii) mit einem oder mehreren weiteren Folienformelementen (10C; 10D; 10E), um die Folie mit einer oder mehreren weiteren ultraschallgeschweißten Längsnähten zu formen.

62. Verfahren nach Anspruch 61, wobei Schritt ii) zweimal mehr ausgeführt wird, um eine Folie zu formen, die fünf Folienformelemente aufweist.

63. Verfahren zur Bereitstellung einer Schutzabdeckung für Feldfrüchte, einer Bodenabdeckung, einer Geotextilie oder eines Baugewebes, wobei das Verfahren aufweist:
Bereitstellen einer Folie (50; 500) nach einem der Anspruche 1 bis 57 in Rollenform;
Abrollen und Entfalten der Folie.

## Revendications

1. Revêtement (50;500) qui est une couverture de protection de culture agricole, une couverture de sol, un géotextile ou un tissu de construction, le revêtement comprenant au moins deux éléments en forme de feuille (12,14;90,90';510;520) au moins partiellement unis l'un à l'autre par un joint lié par ultrasons (530;540;550;80;129), dans lequel chaque élément en forme de feuille possède une première et une deuxième surfaces opposées, où des portions des premières surfaces du premier et du deuxième éléments en forme de feuille sont unies aux bords respectifs ou près de ceux-ci pour former le joint lié par ultrasons, des portions supplémentaires des premières surfaces du premier et du deuxième éléments en forme de feuille formant au moins une partie d'une première surface du revêtement, et des portions supplémentaires des deuxièmes surfaces du premier et du deuxième éléments en forme de feuille formant au moins une partie d'une deuxième surface du revêtement, et dans lequel en outre le joint dépend de la deuxième surface du revêtement.

2. Revêtement selon la revendication 1, dans lequel le joint est en saillie ou en retrait ou se trouve sur un coté.

3. Revêtement selon la revendication 1, dans lequel des portions des premières ou des deuxièmes surfaces du premier et du deuxième éléments en forme de feuille fournissent une première et une deuxième surfaces externes du premier joint et ni la première, ni la deuxième surface externe du premier joint est unie avec la deuxième surface du revêtement, de surfaces à surface.

4. Revêtement selon l'une quelconque des revendications 1 à 3, dans lequel chaque élément en forme de feuille du revêtement comprend un tissu non tissé, le tissu non tissé étant un tissu filé-lié (132:260).

5. Revêtement selon l'une quelconque des revendications 2 à 4, dans lequel les bords respectifs comprennent les bords longs du premier et du deuxième éléments en forme de feuille, et dans lequel le premier joint comprend une portion pliée d'au moins un du premier et du deuxième éléments en forme de feuille de sorte que le premier joint comprend au moins trois couches.

6. Revêtement selon la revendication 5, dans lequel le premier joint comprend trois ou quatre couches.

7. Revêtement selon l'une quelconque des revendications précédentes, où le revêtement est une couverture de protection de culture agricole.

8. Revêtement selon l'une quelconque des revendications précédentes, dans lequel la couverture de protection de culture agricole est une couverture de protection de plante ou de ligne de semis.

9. Revêtement selon la revendication 8, dans lequel la couverture est une couverture de protection de culture de laitue.

10. Revêtement selon l'une quelconque des revendications précédentes, où le revêtement est une couverture de sol, un géotextile ou un tissu de construction tel qu'une membrane de sous-toiture ou une enveloppe de maison.

11. Revêtement selon l'une quelconque des revendications précédentes, où le revêtement comprend un matériau polymère plastique.

12. Revêtement selon la revendication 11. dans lequel le matériau polymère plastique est une polyoléfine.

13. Revêtement selon la revendication 12, dans lequel ladite polyoléfine est choisie parmi un polypropylène, un polyéthyléne ou des mélanges et des copolymères de ceux-ci.

14. Revêtement selon la revendication 4 ou l'une quelconque des revendications 5 à 13 lorsqu'elles sont dépendantes de la revendication 4, dans lequel chaque élément en forme de feuille du revêtement comprend en outre un film et/ou un filet,

15. Revêtement selon la revendication 4, dans lequel ledit tissu filé-lié est un tissu filé-lié non tissé de polypropyléne.

16. Revêtement selon l'une quelconque des revendications précédentes, où le revêtement comprend un laminé de deux couches ou plus.

17. Revêtement selon la revendication 14 ou l'une ou l'autre des revendications 15 et 16 lorsqu'elles sont dépendantes de la revendication 14, où ledit film et/ou filet renforce un bord du revêtement.

18. Revêtement selon l'une quelconque des revendications précédentes, dans lequel chaque élément en forme de feuille est substantiellement de forme rectangulaire.

19. Revêtement selon la revendication 18, dans lequel le bord long de chaque élément en forme de feuille rectangulaire est d'une longueur d'entre 10 mètres et 500 mètres.

20. Revêtement selon la revendication 19, dans lequel ledit bord long possède une longueur d'entre 10 mètres et 250 mètres.

21. Revêtement selon l'une quelconque des revendications précédentes, dans lequel chaque élément en forme de feuille possède une largeur de 2,4 mètres à 3,2 mètres.

22. Revêtement selon l'une quelconque des revendications précédentes, comprenant plus de deux éléments en forme de feuille, chaque élément en forme de feuille étant uni à une partie adjacente par un joint lié par ultrasons.

23. Revêtement selon l'une quelconque des revendications 1 à 22, où le revêtement comprend un premier, un deuxième et un troisième éléments en forme de feuille (12,14,15), le troisième élément en forme de feuille possédant une première surface et une deuxième surface, où des portions des deuxièmes surfaces du deuxième et du troisième éléments en forme de feuille sont unies aux bords respectifs ou près de ceux-ci pour former un deuxième joint lié par ultrasons, des portions supplémentaires des deuxièmes surfaces du deuxième et du troisième éléments en forme de feuille formant au moins une partie d'une deuxième surface du revêtement, et des portions supplémentaires des premières surfaces du deuxième et du troisième éléments en forme de feuille formant au moins une partie d'une première surface du revêtement, dans lequel en outre le deuxième joint dépend de la première surface du revêtement.

24. Revêtement selon la revendication 23, comprenant en outre un quatrième élément en forme de feuille (16) uni au troisième élément en forme de feuille par un troisième joint lié par ultrasons arrangé d'une manière similaire au premier joint.

25. Revêtement selon la revendication 24, comprenant en outre un cinquième élément en forme de feuille (17) uni au quatrième élément en forme de feuille par un quatrième joint lié par ultrasons arrangé d'utre manière similaire au deuxième joint.

26. Revêtement selon l'une quelconque des revendications précédentes, dans lequel ledit joint lié par ultrasons est produit par une liaison comprenant une liaison par une barre solide et/ou une liaison intermittente.

27. Revêtement selon la revendication 26, dans lequel ladite liaison est une liaison intermittente comprenant une série de zones de liaison comprenant des zones de liaison gaufrées.

28. Revêtement selon la revendication 27, dans lequel lesdites zones de liaison présentent une forme choisie parmi une forme rectangulaire, carrée, de ligne continue ou de barre allongée ou des combinaisons de celles-ci.

29. Revêtement selon la revendication 27 ou la revendication 28, dans lequel lesdites zones de liaison présentent une lisière externe courbée,

30. Revêtement selon la revendication 29, dans lequel lesdites zones de liaison présentent une forme choisie parmi des formes de barre allongée, circulaire, ovale et elliptique.

31. Revêtement selon l'une quelconque des revendications 27 à 30, dans lequel plusieurs zones de liaison sont arrangées sous forme d'au moins une ligne substantiellement droite.

32. Revêtement selon la revendication 31, dans lequel de nombreuses lignes espacées substantiellement parallèles de zones de liaison sont fournies.

33. Revêtement selon la revendication 32, dans lequel lesdites lignes de zones de liaison sont formées substantiellement parallèles aux bords adjacents respectifs des au moins deux éléments en forme de feuille.

34. Revêtement selon la revendication 33, dans lequel lesdites zones de liaison d'une quelconque ligne donnée sont espacées substantiellement également les unes des autres.

35. Revêtement selon la revendication 34, dans lequel les zones de liaison dans n'importe quelle ligne sont toutes substantiellement de la même forme.

36. Revêtement selon l'une quelconque des revendications 31 à 35, dans lequel une zone de liaison dans n'importe quelle ligne particulière est tournée par rapport à une zone de liaison adjacente dans ladite ligne de liaison particulière en ce qui concerne un bord d'au moins une des au moins deux parties de 45°.

37. Revêtement selon la revendication 36, dans lequel chaque quatrième zone de liaison dans une quelconque ligne donnée a substantiellement la même orientation par rapport à un axe défini en particulier donnant un motif de répétition régulier le long de la ligne de zones de liaison.

38. Revêtement selon l'une quelconque des revendications 31 à 37, dans lequel la pluralité de zones de liaison comprend une pluralité de lignes adjacentes substantiellement parallèles de zones de liaison espacées régulièrement.

39. Revêtement selon l'une quelconque des revendications 32 à 38, dans lequel les zones de liaison dans une ligne particulière de zones de liaison sont alignées ou décalées par rapport à des zones de liaison dans une ligne adjacente de zones de liaison.

40. Revêtement selon l'une quelconque des revendications 32 à 39, dans lequel des zones de liaison adjacentes d'au moins une ligne sont espacées à une fréquence ou une densité inférieure à l'espacement des zones de liaison d'une ou d'autres lignes.

41. Revêtement selon la revendication 40, dans lequel lesdites zones de liaison espacées sont espacées à environ deux fois la distance des autres zones de liaison.

42. Revêtement selon la revendication 41, dans lequel la au moins une ligne de zones de liaison espacées est une ligne externe ou interne de la pluralité de lignes.

43. Revêtement selon la revendication 42, dans lequel une ligne externe ou interne comprend des zones de liaison qui sont moins profondément gaufrées que d'autres zones de liaison dans une série de lignes.

44. Revêtement selon la revendication 43, dans lequel une ligne de zones de liaison adjacente à la au moins une ligne de zones de liaison espacées supplémentaires est plus profondément gaufrée que la au moins une ligne de zones de liaison espacées supplémentaires, et la ligne adjacente suivante de zones de liaison est liée plus profondément que la ligne de zones de liaison adjacente à la au moins une ligne de zones de liaison espacées supplémentaires, pour donner une progression de zones plus profondément liées en travers du joint lié.

45. Revêtement selon l'une quelconque des revendications 31 à 44, dans lequel au moins une ligne de zones de liaison est interrompue par au moins une région ou une portion non liée donnant un vide dans la au moins une ligne.

46. Revêtement selon la revendication 45, dans lequel il est prévu plus d'un vide et les vides sont espacés substantiellement également les uns des autres.

47. Revêtement selon la revendication 45 ou la revendication 46, dans lequel une liaison adjacente à un vide dans une ligne de zones de liaison est courbée.

48. Revêtement selon la revendication 47, dans lequel ladite zone de liaison courbée s'étend longitudinalement et transversalement dans le vide dans une direction non parallèle à la ligne de zones de liaison à partir de laquelle la zone de liaison courbée s'étend.

49. Revêtement selon l'une quelconque des revendications 27 à 48, dans lequel la série de zones de liaison comprend en outre une région ou des régions liées qui donnent un moyen d'affichage.

50. Revêtement selon la revendication 49, dans lequel lesdites régions liées sont de plus fournies par un calandrage ou un collage.

51. Revêtement selon la revendication 49 ou la revendication 50, dans lequel lesdites régions liées sont prévues adjacentes à une série de zones liées.

52. Revêtement selon l'une quelconque des revendications précédentes, dans lequel ledit joint comprend une région d'entre 5 mm et 100 mm de large.

53. Revêtement selon la revendication 52, dans lequel ledit joint comprend une région d'entre 15 mm et 20 mm de large,

54. Revêtement selon l'une quelconque des revendications 1 à 24, dans lequel ledit joint est choisi parmi un joint en saillie ou en retrait.

55. Revêtement selon l'une quelconque des revendications précédentes, possédant une largeur d'entre 6 mètres et 16 mètres.

56. Revêtement selon l'une quelconque des revendications précédentes, qui est pliable sous forme d'une feuille en accordéon avant usage.

57. Revêtement selon la revendication 56, qui est fourni sous forme de rouleau.

58. Procédé pour la formation d'un revêtement qui est une couverture de protection de culture agricole, une couverture de sol, un géotextile ou un tissu de construction, le procédé comprenant les étapes:
de fourniture d'au moins deux éléments en forme de feuille (12,14;90,90';510;520), chaque élément en forme de feuille possédant une première et une deuxième surfaces opposées;
de placement des premières surfaces des au moins deux éléments en forme de feuille en une relation longitudinale dans un contact intime;
de liaison par ultrasons de portions des premières surfaces desdits au moins deux éléments en forme de feuille ensemble aux bords respectifs ou près de ceux-ci pour former un joint qui comprend un joint longitudinal de sorte que des portions supplémentaires des premières surfaces du premier et du deuxième éléments en forme de feuille forment au moins une partie d'une première surface du revêtement, et des portions supplémentaires des deuxièmes surfaces du premier et du deuxième éléments en forme de feuille forment au moins une partie d'une deuxième surface du revêtement, et de sorte que le joint dépend de la deuxième surface du revêtement.

59. Procédé selon la revendication 58, dans lequel ledit joint est formé aux bords longs ou adjacent à ceux-ci des au moins deux éléments en forme de feuille.

60. Procédé selon la revendication 58 ou la revendication 59, dans lequel lesdits éléments en forme de feuille devant être liés sont placés en une relation adjacente l'un à l'autre et ensuite liés ensemble par ultrasons.

61. Procédé selon l'une quelconque des revendications 58 à 60, comprenant les étapes:
i) de placement d'un premier élément en forme de feuille (10A) en une relation substantiellement adjacente à un deuxième élément en forme de feuille (10B) et de liaison desdits premier et deuxième éléments en forme de feuille ensemble le long des bords longs adjacents respectifs de ceux-ci pour former le revêtement présentant un premier joint longitudinal lié par ultrasons (530;240:550;380;129); et
ii) de placement d'un troisième élément en forme de feuille en une relation substantiellement adjacente au deuxième élément en forme de feuille et de liaison desdits deuxième et troisième éléments en forme de feuille le long des bords longs adjacents respectifs pour former le revêtement présentant un deuxième joint longitudinal lié par ultrasons; et
iii) éventuellement, d'exécution de l'étape ii) avec un ou plusieurs éléments en forme de feuille supplémentaires (10C; 10D; 10E) pour former le revêtement présentant un ou plusieurs joints longitudinaux liés par ultrasons supplémentaires.

62. Procédé selon la revendication 61, dans lequel l'étape ii) est réalisée deux fois de plus pour former un revêtement comprenant cinq éléments en forme de feuille.

63. Procédé pour la fourniture d'une couverture de protection de culture agricole, d'une couverture de sol, d'un géotextile ou d'un tissu de construction comprenant:
la fourniture d'un revêtement (50;500) selon l'une quelconque des revendications 1 à 57 sous forme de rouleau;
le déroulement et le dépliement du revêtement.
